# EUROPÄISCHE PATENTSCHRIFT

(11) **EP 0 927 924 B1**
(45) Veröffentlichungstag und Bekanntmachung des Hinweises auf die Patenterteilung: **09.04.2003**
(21) Anmeldenummer: 98123476.8
(22) Anmeldetag: 11.12.1998
(51) Int. Cl.: G06F 1/16

(54) **Aus einem Computer und integrierter Telekommunikationseinrichtung bestehendes Gerät**
Apparatus comprising a computer and an integrated telecommunication device
Appareil comprenant un ordinateur et un dispositif de télécommunication intégré

(30) Priorität: 05.01.1998 GB 9800119
(43) Veröffentlichungstag der Anmeldung: 07.07.1999
(73) Patentinhaber: SIEMENS AKTIENGESELLSCHAFT, 80333 München (DE)
(72) Erfinder: Riddiford, Martin, London SE21 7DF (GB); Witts, Martin, Abbots, Berkshire RG7 4EE (GB)

(56) Entgegenhaltungen:
- DE-U- 29 610 265
- US-A- 4 839 837
- PATENT ABSTRACTS OF JAPAN vol. 017, no. 363 (P-1570), 8. Juli 1993 & JP 05 053685 A (MATSUSHITA ELECTRIC IND CO LTD), 5. März 1993 & JP 05 053685 A (MATSUSHITA ELECTRIC IND CO)

## Beschreibung

Aus einem Computer und integrierter Telekommunikationseinrichtung bestehendes tragbares Gerät, bei dem der Computer, die Computertastatur, die Anzeigevorrichtung sowie die Telekommunikationseinrichtung in Modulen untergebracht sind, die um eine ihnen gemeinsame Achse schwenkbar gelagert sind.

Ein derartiges Gerät ist durch die Schrift DE 296 10 265 U1 bekannt. Im zusammengeklappten Zustand liegen die Computertastatur und die Anzeigefläche an den Innenflächen der beiden Module aneinander, während an der der Anzeigefläche abgewandten Fläche des Moduls die Tastatur der Telekommunikationseinrichtung sowie das Mikrofon, der Lautsprecher und ein Display zur Anzeige von eingegebenen Ziffern oder Zeichen angeordnet sind.

Bei diesem Gerät muß es als nachteilig erachtet werden, daß bei der Beschriftung der Anzeigefläche mittels eines Eingabestiftes nur eine mögliche stabile Stellung der beiden Module zueinander, nämlich der aufgeklappte Zustand eingenommen werden kann. Dabei muß das Gerät auf einer ebenen harten Unterlage aufliegen, da keine Fixierung der Module in dieser Lage vorgenommen werden kann.

Da im aufgeklappten Zustand die Telefontastatur ebenfalls auf der Unterlage aufliegt, kann es bei eingeschaltetem Gerät zu einer ungewollten Betätigung von Telefontasten kommen.

Der vorliegenden Erfindung liegt daher die Aufgabe zugrunde, das Gerät der eingangs genannten Art so zu gestalten, daß die Bedienbarkeit wesentlich erleichtert wird.

Gemäß der Erfindung wird diese Aufgabe dadurch gelöst, daß das Gerät aus einer Systemeinheit, einer Anzeigeeinheit sowie einer Tastatureinheit aufgebaut ist, wobei jeweils die außenliegende Systemeinheit und Tastatureinheit nur im zusammengeklappten und in einem um 180° aufgeklappten Zustand arretierbar sind, während die zwischen ihnen angeordnete Anzeigeeinheit in einem Winkel von 0 bis 90° in bezug auf die Systemeinheit verstellbar und arretierbar ist.

Durch eine derartige Gestaltung braucht das Gerät zur Eingabe von Daten oder zur Beschriftung der Anzeigeeinheit nur um 180° aufgeklappt zu werden und bildet aufgrund seiner Arretierung in dieser Lage eine stabile Unterlage für die schwenkbare Anzeigeeinheit. Diese Gerätekonfiguration ist für den mobilen Gebrauch z. B. in einem Zug vorgesehen, wobei die Anzeigeeinheit vorzugsweise auf der Systemeinheit aufliegt. Bei Auflage des geöffneten Gerätes auf einer festen Unterlage, z. B. auf einem Tisch, kann die Anzeigeeinheit nach Lösen einer leichten mechanischen Sperre in eine gewünschte Schrägstellung gebracht und in dieser Stellung arretiert werden. Durch die arretierte Stellung von System- und Tastatureinheit sowie die fixierte Schrägstellung der Anzeigeeinheit ist gewährleistet, daß das Gerät bei Bedienung mittels des Eingabestifte, d. h., durch mechanischen Druck auf die Anzeigevorrichtung nicht umkippt. Es ist auch denkbar, daß die Anzeigeeinheit beim Öffnen des Gerätes automatisch in eine bevorzugte Schrägstellung gebracht und fixiert wird. Im Bedarfsfall kann die Anzeigeeinheit nach Lösen der Sperre in eine flache Grundposition (Auflage auf der Systemeinheit) zurückgeführt werden. Weiterhin kann die Möglichkeit vorgesehen werden, die Anzeigeeinheit über einen Winkel von 90° zu verschwenken, um Auswechslungs- und Wartungsarbeiten an der Systemeinheit durchführen zu können.

Um ein ungewolltes Betätigen von Tasten oder anderen Bedienungselementen wie bei dem zuvor beschriebenen bekannten Gerät zu vermeiden, sind gemäß einer weiteren Ausgestaltung der Erfindung die im zusammengeklappten Zustand des Gerätes außenliegenden Flächen der System- und Tastatureinheit frei von diesen Eingabeelementen. Es können somit auch bei eingeschaltetem Gerät im Transportfall oder im aufgeklappten Zustand keine Eingabeelemente gedrückt werden, was wiederum die Sicherheit des Gerätes erhöht.

Dabei kann die Telekommunikationseinrichtung zweckmäßig mit den zu ihrem Betrieb erforderlichen Modulen und Komponenten wie Lautsprecher, Mikrofon, Ein- und Ausschaltevorrichtung sowie Antenne in die Systemeinheit integriert sein. Dabei können die Ein- und Ausschaltevorrichtung sowie der Lautsprecher, das Mikrofon und die Antenne an den Stirnseiten oder an einer nicht von der Tastatureinheit bedeckten Innenfläche der Systemeinheit angeordnet sein, so daß ein Telefonieren im zusammengeklappten Zustand des Gerätes möglich ist. Das Eingeben von Rufnummern kann bei geöffnetem Gerät über die Tastatureinheit oder bei entsprechenden auf der Anzeigeeinheit gespeicherten oder eingegebenen Bedienoberflächen mittels eines Eingabestiftes erfolgen.

Neben der Telekommunikationseinrichtung kann die Systemeinheit weiterhin aus einer Rechnerplattform, festen und auswechselbaren Peripheriekomponenten, Steckaufnahmen sowie einem aufsteckbaren Batteriefach bestehen. Hierbei enthält die Rechnerplattform den Computer und Speicherkomponenten, während als feste Peripheriekomponenten nicht flüchtige Speicher und Leseeinrichtungen vorgesehen sind. Als für den jeweiligen Bedarf auswechselbare Peripheriekomponenten können SIM- und Speicherkarten verwendet werden, die über die Oberfläche der Systemeinheit zugeführt werden. Diese Karten können z. B. über auf der Innenfläche der Systemeinheit vorgesehene Aufnahmeschlitze eingeführt werden.

Weiterhin kann die Systemeinheit so gestaltet sein, daß sie eine Aufnahme für die Anzeigeeinheit besitzt. Dadurch kanndie Anzeigeeinheit raumsparend innerhalb der Systemeinheit angeordnet werden und ist somit im aufgeklappten Zustand für den mobilen Betrieb des Gerätes sicher gehaltert.

Die Tastatureinheit wird im wesentlichen aus einer Tastatur sowie einem in einer Ablage befindlichen Eingabestift gebildet, wobei die Tastatur in einem Tastaturgehäuse gehaltert ist, das an seiner Außenfläche mit einem schnappbaren Deckel verschlossen ist. Durch Entfernen dieses schnappbaren Deckels können kleinere Wartungsarbeiten schnell und einfach an der Tastatureinheit durchgeführt werden. Eine weitere Erleichterung bei der Wartung der Tastatureinheit kann dadurch erreicht werden, daß die Tastatur innerhalb des Tastaturgehäuses verrastet gehaltert ist.

Die Anzeigeeinheit dient, wie bereits ausgeführt, zur Beschriftung mittels des Eingabestiftes oder zum Abrufen von auf Bedienoberflächen angeordneten Zeichen mittels Berührung durch den Eingabestift (touch screen). Die Anzeigeeinheit weist ein LCD-Display auf und ist innerhalb von rahmenförmigen Gehäuseteilen gelagert.

Schließlich können die Einheiten so gestaltet sein, daß sie zur Reparatur oder Wartungszwecken als ganze Module ausgewechselt werden können.

Die Erfindung soll im folgenden anhand von Ausführungsbeispielen näher erläutert werden.

Es zeigen jeweils in einer perspektivischen Darstellung
Figur 1 das aus einem Computer und integrierter Telekommunikationseinrichtung bestehende Gerät im geschlossenen Zustand,
Figur 2 das Gerät im aufgeklappten Zustand,
Figur 3 einen Teil des Gerätes in einer ersten fixierten Lage,
Figur 4 einen Teil des Gerätes in einer zweiten fixierten Lage,
Figur 5 das Gerät in einer Explosionsdarstellung.

Das dargestellte, aus einem Computer und einer integrierten Telekommunikationseinrichtung bestehende Gerät 1 setzt sich im wesentlichen aus drei einzelnen Komponenten, nämlich einer Systemeinheit, einer Anzeigeeinheit und einer Tastatureinheit zusammen, die über eine ihnen gemeinsame Achse miteinander schwenkbar verbunden sind.

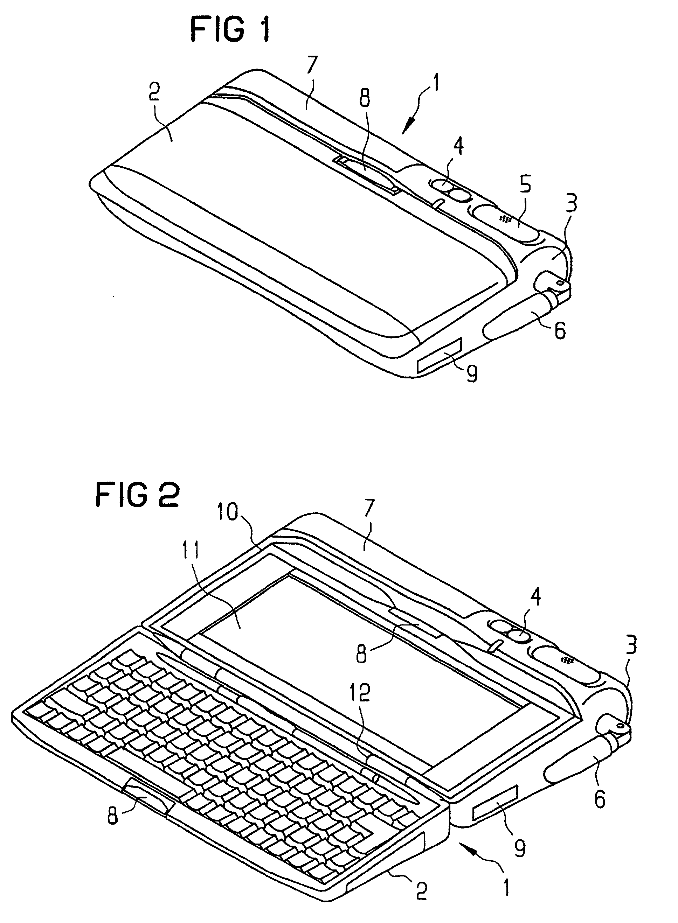

Figur 1 zeigt das Gerät 1 im geschlossenen Zustand. In diesem Zustand sind die von Bedienungselementen freie Rückseite der Tastatureinheit 2 und die Innenseite der Systemeinheit 3 zu erkennen. An der Systemeinheit 3 ist eine Ein- sowie Ausschaltevorrichtung 4 sowie eine Lautsprecherabdeckung 5 und eine Antenne 6 für die Telekommunikationseinrichtung angeordnet. Außerdem ist ein der Stromversorgung dienendes und Batterien enthaltendes Batteriefach 7 mittels einer Rastverbindung an der Systemeinheit angebracht. Weiterhin ist im oberen Bildbereich eine Griffmulde 8 an der Tastatureinheit 2 zu erkennen, während der Schalter zur Inbetriebnahme und zum Abschalten des Gerätes 1 mit 9 bezeichnet ist.

Durch Hintergreifen der Griffmulde 8 wird die Tastatureinheit in die in Figur 2 dargestellte Lage aufgeklappt. Dabei wird die Tastatureinheit 2 um 180° zur Systemeinheit 3 verschwenkt und in dieser Lage arretiert. In einer Aufnahme 10 innerhalb der Systemeinheit ist die dritte Komponente, die Anzeigeeinheit 11 ebenfalls schwenkbar um die Achse 12 gelagert. Neben der Achse 12 befindet sich eine muldenförmige Ablage 13 für den Eingabestift 14.

Die in Figur 2 gezeigte Geräteposition ist z. B. für den mobilen Gebrauch vorgesehen, z. B. bei Verwendung des Gerätes in einem Zug.

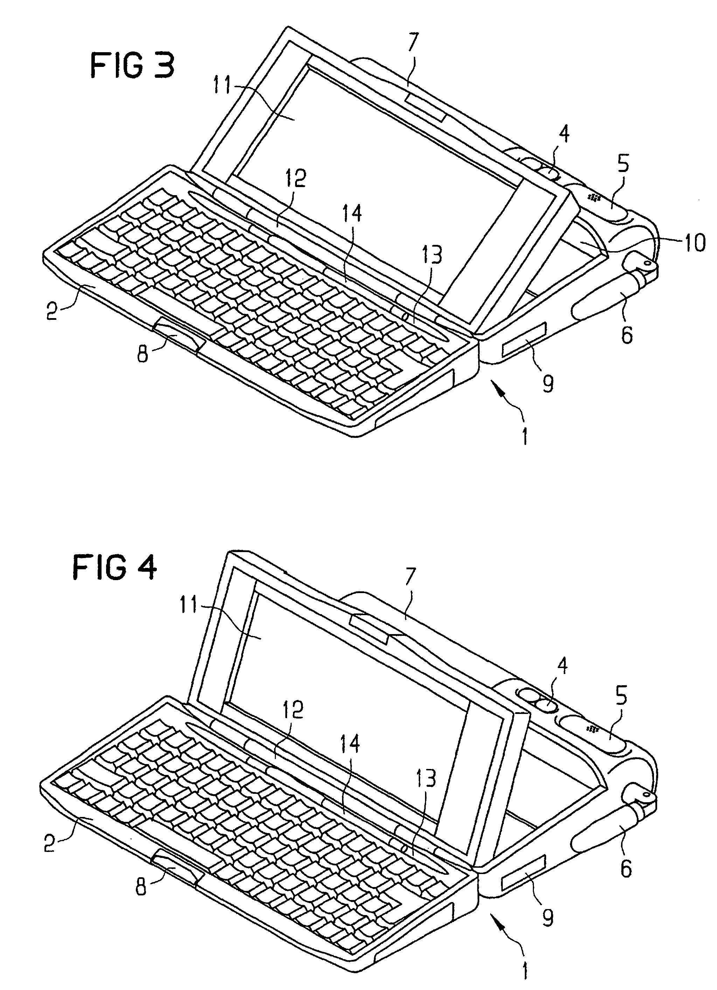

Soll die Anzeigeeinheit zur besseren Bedienbarkeit auf einer festen Fläche, z. B. einem Tisch gut sichtbar und z. B. mittels des Eingabestiftes 14 beschreibbar sein, so kann eine der in den Figuren 3 und 4 dargestellte Lagen der Anzeigeeinheit gewählt werden. Zu diesem Zweck kann die Anzeigeeinheit entweder stufenlos oder auch in Rasterschritten aus der Aufnahme 10 heraus in die gewünschte Position verschwenkt und in dieser Stellung verrastet werden, während die Position von Tastatureinheit 2 und Systemeinheit 3 unverändert bestehen bleibt. Dies hat auf einer harten Unterlage den großen Vorteil, daß die verrastete Anzeigeeinheit bei ihrer Beschriftung nicht abkippen kann, da die Tastatur- und Systemeinheit zusammen eine stabile Unterlage bilden.

Als weitere Variante ist es auch denkbar, daß die Anzeigeeinheit 11 beim Öffnen des Gerätes 1 automatisch in eine vorgegebene Schräglage geführt wird, aus der sie nach Aufheben der Rastverbindung in die in Figur 2 dargestellte Position zurückbewegt werden kann.

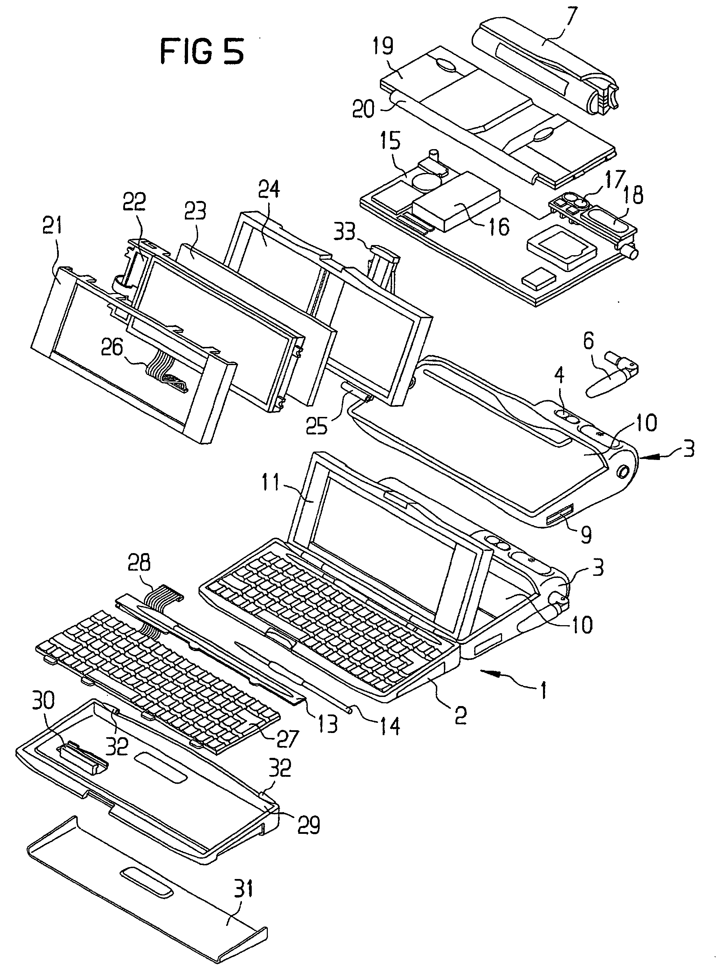

Die Figur 5 zeigt in einer perspektivischen Explosionszeichnung des wesentlichen Aufbau des in der Bildmitte zusammengesetzten Gerätes 1.

Die in der oberen Bildebene befindliche Systemeinheit weist neben den bereits erwähnten Bedienungselementen 4 und 9 sowie der Antenne 6 eine Rechnerplattform 15 mit dem Computer und dem Speicher 16, entsprechende Module 17 und Komponenten, z. B. Lautsprecher 18 und Mikrofon für den Kommunikationsbetrieb, entsprechende Steckelemente zur Aufnahme von z. B. Kopfhörer, Batteriefach sowie weitere Peripheriekomponenten, z. B. nicht flüchtige Speicher, Kartenleseeinrichtungen usw. auf. Die Rechnerplattform 15 wird mit der Abdeckung 19 verschlossen, die an einer Längsseite eine Schwenkachsenaufnahme 20 besitzt. Diese Abdeckung 19 weist auf ihrer der Rechnerplattform 15 abgewandten Seite weitere, von außen erreichbare Zugänge zum Einbringen von SIM-Karten für den Telefonbetrieb oder Speicherkarten auf. Das Herstellen einer Telefonverbindung kann bei angeschaltetem Gerät durch Zifferneingabe über die Tastatur 27, durch Berühren von auf dem LCD-Display 22 erscheinenden Symbolen oder durch Einschreiben von Ziffern oder Zeichen mittels des Eingabestiftes 14 auf der LCD-Anzeige 22 erfolgen. Die im zusammengeklappten Zustand des Gerätes befindliche Außenfläche der Systemeinheit 3 ist wie die Außenseite der Tastatureinheit 2 frei von Bedienungselementen, so daß ein ungewolltes Auslösen irgendwelcher Funktionen bei versehentlich eingeschaltetem Gerät ausgeschlossen ist.

Die in der Bildmitte dargestellte Anzeigeeinheit setzt sich aus dem Abdeckrahmen 21, dem LCD-Display 22 mit Flachbandkabel 26, der Abstandsplatte 23, dem Displaygehäuse 24 sowie einem Halteteil 33 zusammen. An dem Displaygehäuse 24 sind wiederum zwei Schwenkachsenaufnahmen 25 an einer seiner Längskanten angeordnet.

Die Anzeigeeinheit 11 kann, wie bereits erwähnt, zum Zweck der Zeicheneingabe mittels eines Eingabestiftes 14 entweder flach innerhalb der Aufnahme 10 der Systemeinheit 3 gehaltert sein oder in einem vorgegebenen Winkel bis zu 90° aufgerichtet und in dieser Lage fixiert sein. Die Anzeigeeinheit 11 kann aber auch über einen Winkel von 90° verschwenkt werden, um einen besseren Zugang zu den Peripherieeinheiten auf der Oberfläche der Systemeinheit 3 zu ermöglichen.

Die in der unteren Bildhälfte dargestellte Tastatureinheit 2 besteht aus der Tastatur 27 mit dem Flachbandkabel 28, die in das Tastaturgehäuse 29 eingebracht und dort z. B. mittels der Halterung 30 arretiert wird. Auf die im zusammengeklappten Zustand des Gerätes befindliche Außenseite wird ein Deckel 31 aufgeschnappt, der im Bedarfsfall den Zugang zu den Bauteilen der Tastatureinheit 2 ermöglicht. In das Tastaturgehäuse 29 ist ferner die Ablage 13 für den Eingabestift 14 eingebracht. An einer Längskante des Tastaturgehäuses sind wiederum konisch zulaufende Lagerbuchsen 32 zur Aufnahme der allen drei Komponenten gemeinsamen Achse.

Zu Wartungs- und Reparaturarbeiten können die Tastatur- und die Anzeigeeinheit 2 und 3 als ganze Module ausgewechselt werden.

## Patentansprüche

1. Aus einem Computer und integrierter Telekommunikationseinrichtung bestehendes tragbares Gerät (1), bei dem der Computer, die Computertastatur (2), die Anzeigevorrichtung (11) sowie die Telekommunikationseinrichtung in Modulen untergebracht sind, welche aus einer Systemeinheit (3), einer Anzeigeeinheit (11) sowie einer Tastatureinheit (2) bestehen und, die um eine ihnen gemeinsame Achse (12) schwenkbar gelagert sind, und die jeweils die außenliegende Systemeinheit (3) und die Tastatureinheit (2) nur im zusammengeklappten und in einem um 180° aufgeklappten Zustand arretierbar sind, **dadurch gekennzeichnet**, die zwischen ihnen angeordnete Anzeigeeinheit (11) in einem Winkel von 0 bis 90° in bezug auf die Systemeinheit (3) verstellbar und arretierbar ist.

2. Gerät nach Anspruch 1, **dadurch gekennzeichnet, daß** im zusammengeklappten Zustand des Gerätes (1) die außenliegenden Flächen der Systemeinheit (3) und der Tastatureinheit (2) frei von Eingabeelementen sind.

3. Gerät nach Anspruch 1, **dadurch gekennzeichnet, daß** die Telekommunikationseinrichtung mit den zu ihrem Betrieb erforderlichen Modulen (17) und Komponenten wie Lautsprecher (18), Mikrofon, Ein- und Ausschaltevorrichtung (4) und Antenne (6) in die Systemeinheit (3) integriert ist.

4. Gerät nach Anspruch 1 und Anspruch 3, **dadurch gekennzeichnet, daß** die Systemeinheit (3) durch eine Rechnerplattform (15), festen und auswechselbaren Peripheriekomponenten (16), Steckaufnahmen sowie einem aufsteckbaren Batteriefach (7) gebildet ist.

5. Gerät nach Anspruch 4, **dadurch gekennzeichnet, daß** die Rechnerplattform (15) den Computer und Speicherkomponenten (16) beinhaltet.

6. Gerät nach Anspruch 4, **dadurch gekennzeichnet, daß** als feste Peripheriekomponenten nicht flüchtige Speicher und Leseeinrichtungen vorgesehen sind.

7. Gerät nach Anspruch 4, **dadurch gekennzeichnet, daß** als auswechselbare Peripheriekomponenten SIM- und Speicherkarten verwendet werden, die über die Oberfläche (19) der Systemeinheit (3) zugeführt werden.

8. Gerät nach Anspruch 4, **dadurch gekennzeichnet, daß** die Systemeinheit (3) eine Aufnahme (10) für die Anzeigeeinheit (11) aufweist.

9. Gerät nach Anspruch 1, **dadurch gekennzeichnet, daß** die Tastatureinheit (2) die Tastatur (27) sowie einen in einer Ablage (13) befindlichen Eingabestift (14) enthält, wobei die Tastatur (27) in einem Tastaturgehäuse (29) gehaltert ist, das an seiner Außenfläche mit einem schnappbaren Deckel (31) verschlossen ist.

10. Gerät nach Anspruch 9, **dadurch gekennzeichnet, daß** die Tastatur (27) innerhalb des Tastaturgehäuses (29) verrastet gehaltert ist.

11. Gerät nach Anspruch 1, **dadurch gekennzeichnet, daß** die Anzeigeeinheit (2) ein LCD-Display (22) aufweist, das in rahmenförmigen Gehäuseteilen (21, 24) gehaltert ist.

12. Gerät nach Anspruch 11, **dadurch gekennzeichnet, daß** das LCD-Display (22) über eine Abstandsplatte (23) in ein Displaygehäuse (24) eingebracht ist, daß mit einem Abdeckrahmen (21) verschlossen ist.

13. Gerät nach Anspruch 1, **dadurch gekennzeichnet, daß** die einzelnen Einheiten (2, 3, 11) als komplette Module auswechselbar sind.

## Claims

1. Portable appliance (1) comprising a computer and an integrated telecommunications device, in which the computer, the computer keyboard (2), the display apparatus (11) and the telecommunications device are accommodated in modules which comprise a system unit (3), a display unit (11) and a keyboard unit (2) and are pivotably mounted about an axis (12) which is common to them, and the respective external system unit (3) and the keyboard unit (2) can be locked only in the closed state and in a state which is opened through 180°, **characterized in that** the display unit (11) arranged between them can be adjusted and locked in an angle from 0 to 90° with respect to the system unit (3).

2. Appliance according to Claim 1, **characterized in that** in the closed state of the appliance (1), the external faces of the system unit (3) and of the keyboard unit (2) are free of input elements.

3. Appliance according to Claim 1, **characterized in that** the telecommunications device with the modules (17) and components required for operating it, such as loudspeaker (18), microphone, on/off arrangement (4) and antenna (6), is integrated in the system unit (3).

4. Appliance according to Claim 1 and Claim 3, **characterized in that** the system unit (3) is formed by a computer platform (15), permanent and interchangeable peripheral components (16), plug sockets and a plug-on battery compartment (7).

5. Appliance according to Claim 4, **characterized in that** the computer platform (15) contains the computer and memory components (16).

6. Appliance according to Claim 4, **characterized in that** the permanent peripheral components provided are non-volatile memories and reading devices.

7. Appliance according to Claim 4, **characterized in that** the interchangeable peripheral components used are SIM cards and memory cards which are supplied via the surface (19) of the system unit (3).

8. Appliance according to Claim 4, **characterized in that** the system unit (3) contains a receptacle (10) for the display unit (11).

9. Appliance according to Claim 1, **characterized in that** the keyboard unit (2) contains the keyboard (27) and an input stylus (14) located in a tray (13), the keyboard (27) being mounted in a keyboard housing (29) whose outer face is sealed by a snap-fit cover (31).

10. Appliance according to Claim 9, **characterized in that** the keyboard (27) is mounted so as to be latched within the keyboard housing (29).

11. Appliance according to Claim 1, **characterized in that** the display unit (2) has an LCD display (22) which is mounted in frame-like housing parts (21, 24).

12. Appliance according to Claim 11, **characterized in that** the LCD display (22) is inserted into a display housing (24) above a spacer plate (23), and the display housing is sealed with a cover frame (21).

13. Appliance according to Claim 1, **characterized in that** the individual units (2, 3, 11) can be interchanged as complete modules.

## Revendications

1. Appareil portable (1) se composant d'un ordinateur et d'un dispositif de télécommunication intégré, dans lequel l'ordinateur, le clavier de l'ordinateur (2), le dispositif d'affichage (11) ainsi que le dispositif de télécommunication sont logés dans des modules, lesquels se composent d'une unité système (3), d'une unité d'affichage (11) ainsi que d'une unité de clavier (2) et qui sont logés de façon à pouvoir pivoter autour d'un axe leur étant commun (12), et à chaque fois l'unité système située à l'extérieur (3) et l'unité de clavier (2) peuvent être verrouillées uniquement dans un état replié et dans un état déplié à 180°, **caractérisé en ce que** l'unité d'affichage (11) disposée entre elles peut être réglée et verrouillée selon un angle de 0 à 90° par rapport à l'unité système (3).

2. Appareil selon la revendication 1, **caractérisé en ce qu'**à l'état replié de l'appareil (1), les surfaces extérieures de l'unité système (3) et de l'unité de clavier (2) sont exemptes d'éléments d'entrée.

3. Appareil selon la revendication 1, **caractérisé en ce que** le dispositif de télécommunication avec les modules (17) et les composants nécessaires à son fonctionnement comme le haut-parleur (18), le microphone, le dispositif de mise sous tension et de mise hors tension (4) et l'antenne (6) est intégré dans l'unité système (3).

4. Appareil selon la revendication 1 et la revendication 3, **caractérisé en ce que** l'unité système (3) est formée par une plate-forme d'ordinateur (15), des composantes périphériques (16) fixes et échangeables, des prises enfichables ainsi qu'un compartiment de batterie (7) à emboîtement.

5. Appareil selon la revendication 4, **caractérisé en ce que** la plate-forme d'ordinateur (15) comprend l'ordinateur et les composantes de mémorisation (16).

6. Appareil selon la revendication 4, **caractérisé en ce que** des dispositifs de mémoire et de lecture non volatiles sont prévus comme composantes périphériques fixes.

7. Appareil selon la revendication 4, **caractérisé en ce que** des cartes SIM et à mémoire sont utilisées comme composantes périphériques échangeables, qui sont amenées sur la surface (19) de l'unité système (3).

8. Appareil selon la revendication 4, **caractérisé en ce que** l'unité système (3) présente un logement (10) pour l'unité d'affichage (11).

9. Appareil selon la revendication 1, **caractérisé en ce que** l'unité de clavier (2) renferme le clavier (27) ainsi qu'un crayon d'entrée (14) se trouvant dans un dispositif de réception (13), le clavier (27) étant maintenu dans un boîtier de clavier (29), qui est obturé sur sa surface externe par un couvercle encliquetable (31).

10. Appareil selon la revendication 9, **caractérisé en ce que** le clavier (27) est maintenu en étant enclenché à l'intérieur du boîtier de clavier (29).

11. Appareil selon la revendication 1, **caractérisé en ce que** l'unité d'affichage (2) présente un affichage à cristaux liquides (22) qui est maintenu dans des parties de boîtier (21, 24) en forme de cadre.

12. Appareil selon la revendication 11, **caractérisé en ce que** l'affichage à cristaux liquides (22) est agencé par une plaque d'espacement (23) dans un boîtier d'affichage (24), qui est obturé par un cadre de recouvrement (21).

13. Appareil selon la revendication 1, **caractérisé en ce que** les différentes unités (2, 3, 11) sont échangeables en tant que modules complets.
